# EUROPÄISCHE PATENTSCHRIFT

(11) **EP 2 235 391 B1**
(45) Veröffentlichungstag und Bekanntmachung des Hinweises auf die Patenterteilung: **05.03.2014**
(21) Anmeldenummer: 08860928.4
(22) Anmeldetag: 17.12.2008
(51) Int. Cl.: F16D 23/06

(54) **KRAFTVERSTÄRKUNGSELEMENT**
POWER ASSIST ELEMENT
ÉLÉMENT AMPLIFICATEUR DE FORCE

(30) Priorität: 18.12.2007 AT 20512007
(43) Veröffentlichungstag der Anmeldung: 06.10.2010
(73) Patentinhaber: Miba Sinter Austria GmbH, 4663 Laakirchen (AT)
(72) Erfinder: PAMMINGER, Helmut, A-4840 Vöcklabruck (AT); MÜLLER, Alexander, A-4813 Altmünster (AT)
(74) Vertreter: Chmilewsky-Lehner, Robert
(86) Internationale Anmeldenummer: PCT/AT2008/000456
(87) Internationale Veröffentlichungsnummer: WO 2009/076691

(56) Entgegenhaltungen:
- EP-A- 1 750 025
- WO-A-03/004892
- US-A- 5 664 654

## Beschreibung

Die Erfindung betrifft eine Getriebe-Synchronisationsvorrichtung mit zumindest einer auf einer Welle anordenbaren Synchronnabe, an der in axialer Richtung gegenüberliegend zumindest ein Synchronring angeordnet ist, zumindest einem, auf der Welle anordenbaren Gangzahnrad, zumindest einem Reibpaket, das unterhalb des Synchronringes und mit diesem in Wirkverbindung stehend angeordnet ist, sowie mit zumindest einer über der Nabe anordenbaren Schiebemuffe, wobei zwischen dem Gangzahnrad und dem Synchronring ein Kupplungskörper angeordnet ist und wobei die Synchronnabe zumindest eine Ausnehmungen aufweist, in der zumindest ein federbelastetes Kraftverstärkungselement angeordnet ist, das einen Grundkörper, der eine Höhe und - in Draufsicht betrachtet - eine Längserstreckung und eine Breitenerstreckung aufweist, wobei die Längserstreckung in Umfangsrichtung der Synchronnabe angeordnet ist, und der in Richtung der Längserstreckung zwei einander gegenüberliegende, distale Endbereiche aufweist, an denen jeweils eine Funktionsfläche ausgebildet ist, die im eingebauten Zustand mit der Synchronnabe zusammenwirken, wobei die Funktionsflächen in entgegengesetzter Richtung, insbesondere gegengleich, und gegen die Längserstreckung geneigt oder entlang einer Längsmittelachse in Richtung der Längserstreckung des Grundkörpers versetzt und vorzugsweise zumindest annähernd parallel zueinander verlaufend ausgebildet sind, und wobei die Funktionsflächen jeweils in einem spitzen Winkel zur größten Längserstreckung des Grundkörpers orientiert sind.

In aktuellen, europäischen Großseriengetrieben werden vor allem Synchronisierungen vom Borg Warner Typ eingesetzt. Derartige Getriebe umfassen üblicherweise pro zu schaltendem Gang ein Losrad, einen Kupplungskörper mit Schaltverzahnung und Reibkonus und einen Synchronring mit Gegenkonus und Sperrverzahnung und weiters eine Synchronnabe mit Steckverzahnung und Muffenverzahnung. In dieser Synchronnabe sind federbelastete Druckstücke angeordnet. Mit Hilfe einer Schiebemuffe mit Schaltverzahnung und Innenverzahnung wird zur Vorsynchronisation diese durch die Schaltkraft mitsamt der federbelasteten Druckstücke in die Richtung des zu schaltenden Gangrades verschoben, sodass die Konusflächen von Synchronring und Synchronkonus durch die Druckstücke aufeinander gepresst werden. Der Synchronring wird in der Synchronnabe durch das Reibmoment im Rahmen des tangentialen Spiels verdreht, sodass die Verzahnung von Ring- und Schiebemuffe um eine halbe Verzahnungsbreite gegeneinander verschoben sind. Ist nun die Schaltkraft größer als die Vorsynchronisationskraft, die abhängig von der Vorspannung der Druckfedern der Druckstücke ist, bewegt sich die Schiebemuffe weiter bis die Sperrverzahnung am Synchronring und die Verzahnung der Schiebemuffe aufeinander treffen. Solange das Sperrmoment, resultierend aus der Reibung zwischen den Konusflächen und der Reibung an der Sperrverzahnung, größer ist als das sich aufgrund der Dachschrägenwinkel an der Verzahnung einstellende Rückstellmoment, findet keine weitere axiale Verschiebung der Schiebemuffe statt. Die motorseitigen Getriebeelemente werden durch das Reibmoment beschleunigt bzw. verzögert und es findet damit die Hauptsynchronisation statt. Bei Gleichlauf von Synchronring und Synchronkonus wird das Sperrmoment annähernd Null, sodass die Sperrverzahnung am Synchronring eine Verdrehung des Synchronringes bewirkt, bis sich jeweils Zahn und Zahnlücke gegenüberstehen. Die Verzahnung der Schiebemuffe rutscht durch die Sperrverzahnung des Synchronringes. In der Folge gleitet die Verzahnung der Schiebemuffe mit den Dachschrägen auf der Kupplungsverzahnung am Synchronkonus ab und verdreht den Kupplungskörper mitsamt Losrad bis Zahn und Zahnlücke gegenüberstehen und die formschlüssige Verbindung zwischen Antriebswelle und Losrad hergestellt werden kann.

Zur Verringerung der aufzuwendenden Schaltkraft wurden im Stand der Technik bereits einige Abwandlungen dieses Borg Warner Systems beschrieben.

So ist es aus der DE 696 17 821 T2 bekannt, zwischen der Synchronnabe und einem Synchronisierring einen Verstärkungsmechanismus anzuordnen, der derart positioniert ist, dass er eine Druckkraft aufnimmt, die durch die Bewegung der Schiebemuffe zu dem entsprechenden Geschwindigkeitswechsel-Zahnrad hervorgerufen wird, und dadurch die Druckkraft auf den Synchronring verstärkt und überträgt. Der Verstärkungsmechanismus besteht aus einem paar von Hebeln, die auf zumindest zwei Abschnitte in einer Umfangsrichtung aufgeteilt sind und eine Vielzahl von Hebelköpfen umfassen. Die Hebelköpfe weisen eine abgeschrägte Kante auf, die eine Angriffsposition für die Aufnahme der axialen Druckkraft, welche durch Aufnahme eines direkten Kontakts in Verbindung mit der Bewegung der Schiebemuffe hervorgerufen wird, und für die Zerlegung der betreffenden Druckkraft in eine radiale Komponentenkraft, die zur einer Mitte hin gerichtet ist, und in eine axiale Komponentenkraft bildet. Die axiale Komponentenkraft wird hervorgerufen, wenn eine an der inneren Umfangs-Keilverzahnung der Schiebemuffe vorgesehene, abgeschrägte Kante gegen die abgeschrägte Kante des Hebelkopfes gedrückt wird.

Die Möglichkeit zur Kraftverstärkung über schräge Flächen ist prinzipiell im Stand der Technik dokumentiert. So beschreibt z.B. die DE 22 43 522 A eine Möglichkeit zur Kraftverstärkung, indem am Synchronring eine noppenartige Einrichtung mit zwei schrägen Flächen vorgesehen ist, die mit einer Gegennoppeneinrichtung der Nabe zusammenwirkt. Bei dieser Ausführung wirkt allerdings die gerade Stiunfläche gegen ein rechteckiges Druckstück.

Die EP 1 750 025 A2 beschreibt zur Kraftverstärkung eine weitere Abwandlung der Druckstücke. Diese sind dabei - in Draufsicht gesehen - H-förmig ausgebildet. Die Endbereiche dieses H-förmigen Druckstückes sind mit einer Querschnittserweiterung versehen, wobei die Übergänge zwischen dem Hauptteil des Druckstückes auf die Endbereiche mit schrägen Flächen versehen sind, die in Richtung auf den Mittelpunkt geneigt ausgebildet sind. Die Synchronnabe weist dazu in den für die Aufnahme der Druckstücke vorgesehenen Ausnehmungen zu diesen schrägen Flächen des Druckstückes komplementäre Abschrägungen auf.

Die WO 03/004892 A1 beschreibt eine Synchronisiereinrichtung für ein erstes und ein zweites Antriebsglied, die um eine gemeinsame Achse relativ zueinander drehbar angeordnet sind. Diese Synchronisiereinrichtung umfasst:
ein erstes Element, das drehfest und axial unbewegbar in Bezug auf das erste Antriebsglied befestigt ist;
ein zweites Element, das eine Verbindungseinrichtung enthält, die eine Verschiebung und unverdrehbare Bewegung des zweiten Elementes in Bezug auf das erste Element ermöglicht und erste Klauenmittel enthält, die von einer Neutralstellung aus zu einer Eingriffsstellung mit zweiten Klauenmittel axial bewegbar sind, um die Antriebsglieder in Abhängigkeit von einer Einrückbewegung des zweiten Elementes in Folge einer axial gerichteten ersten Schaltkraft formschlüssig miteinander zu verbinden;
eine erste Reibungseinrichtung, die axial bewegbar ist, um mit einer zweiten Reibungseinrichtung in Eingriff zu kommen, um die ersten und die zweiten Klauenmittel in Abhängigkeit von der Einrückbewegung des zweiten Elementes miteinander zu synchronisieren;
eine erste und eine zweite Sperreinrichtung, die im Eingriffszustand wirksam sind, um ein Ineingriffkommen der ersten mit den zweiten Klauenmitteln vor der Synchronisierung zu verhindern;
eine Vorkraft erzeugende Einrichtung zum Ineingriffbringen der ersten mit der zweiten Reibungseinrichtung mit einer anfänglichen Eingriffskraft in Abhängigkeit von einer anfänglichen Einrückbewegung des zweiten Elementes infolge der ersten Schaltkraft von der Neutralstellung aus und zum Ineingriffbringen der ersten mit der zweiten Sperreinrichtung in Abhängigkeit von dem Anfangseingriff der ersten mit der zweiten Reibungseinrichtung, die ein synchronisierendes Drehmoment erzeugen;
eine erste und eine zweite Servokraft erzeugende Einrichtung, die im Eingriffszustand wirksam sind, um auf das synchronisierende Drehmoment anzusprechen, um eine erste zusätzliche Axialkraft in der Richtung der ersten Schaltkraft zu erzeugen und die Eingriffskraft zwischen der ersten und der zweiten Reibungseinrichtung zu erhöhen, wobei eine der ersten und der zweiten Servokraft erzeugenden Einrichtungen Mittel zum Leiten der ersten zusätzlichen Axialkraft zu der ersten Reibungseinrichtung über die erste und zweite Sperreinrichtung enthält, wobei die erste Servokraft erzeugende Einrichtung an einem der Elemente montiert ist, während die zweite Servokraft erzeugende Einrichtung radial unbewegbar und begrenzt drehbar in Bezug auf das andere Element montiert ist.

Die Vorkraft erzeugende Einrichtung enthält eine erste Rampeneinrichtung, die durch ein elastisches Mittel in Richtung auf einen Eingriff mit einer zweiten Rampeneinrichtung vorgespannt ist, die an der zweiten Servokraft erzeugenden Einrichtung fixiert ist, um in Abhängigkeit von der anfänglichen Einrückbewegung des zweiten Elementes die erste Schaltkraft auf die erste Reibungseinrichtung über die zweite Servokraft erzeugende Einrichtung zu übertragen.

Die Aufgabe der vorliegenden Erfindung besteht in der Schaffung einer Getriebe-Synchronisationsvorrichtung.

Diese Aufgabe der Erfindung wird mit der eingangs genannten Getriebe-Synchronisationsvorrichtung gelöst, bei der der Grundkörpers des Kraftverstärkungselementes die größte Längserstreckung auf der dem Synchronring zugewandten Seite in der axialen Richtung aufweist.

Neben den bekannten Vorteilen derartiger verstärkender Kraftverstärkungselemente, wie z.B. den verbesserten Schaltkomfort im Vergleich zu Borg-Warner Synchronisierungen, hat das erfindungsgemäße Kraftverstärkungselement den Vorteil, dass durch einen Verschleiß im Reibpaket der Getriebe-Synchronisationseinrichtung die Kraftverstärkung nicht bzw. nicht wesentlich beeinflusst wird, wie es z.B. bei dem voranstehend genannten H-förmigen Kraftverstärkungselement der Fall ist. Durch diesen Verschleiß des Reibpaketes wird bei Getriebe Synchronisierungen nach dem Stand der Technik die Verdrehung größer, sodass sich die relative Stellung der Sperrverzahnung des Synchronringes zur Schiebemuffe ändert. Mit dem erfindungsgemäßen Kraftverstärkungselement kann zudem mehr Leistung bei zumindest gleich bleibendem Schaltkomfort übertragen werden. Es sind damit auch schnellere Synchronisationszyklen möglich. Zudem ist durch die mögliche Reduzierung von einer Dreifachkonusausführung der Synchronisation auf eine Zweifachkonusausführung eine Reduzierung der Bauteilgröße möglich oder bei gleicher Bauteilgröße wie im Stand der Technik die Übertragung einer höheren Leistung. Das Kraftverstärkungselement kann als Sinterbauteil gefertigt werden, sodass die Herstellkosten gesenkt werden können, bzw. auch Kraftverstärkungselemente wirtschaftlicher hergestellt werden können, die eine komplexere Geometrie aufweisen. Hierbei erweist sich die Ausbildungsmöglichkeit mit einer größeren Fläche - insbesondere im Vergleich zum H-Stück aus dem Stand der Technik - als Vorteil, da damit die Belastung und dadurch der Verschleiß des Kraftverstärkungselementes geringer gehalten werden kann, sodass gegebenenfalls auf zusätzliche festigkeitssteigernde Maßnahmen, wie z.B. die Wärmebehandlung oder das Härten, verzichtet werden kann, wodurch wiederum die Herstellung des Kraftverstärkungselementes einfacher wird. Durch die Ausführung mit versetzten und vorzugsweise zumindest annähernd parallelen Funktionsflächen kann ein Kraftverstärkungselement zu Verfügung gestellt werden, das in beide Schaltrichtungen wirken kann. Mit der erfindungsgemäßen Synchronnabe kann erreicht werden, dass einerseits die Anzahl der Zähne der Muffenverzahnung erhöht werden kann, wodurch die Mechanik der Synchronnabe verbessert werden kann, und andererseits, dass das Kraftverstärkungselement in radiale Richtung nur teilweise nach außen ragt, mit anderen Worten das Kraftverstärkungselement besser gehalten **werden kann.**

Zur Erhöhung des Reibmomentes des aus innerem und äußerem Konusring bestehenden Reibpaketes der Getriebe-Synchronisationsvorrichtung bzw. auch zur Erhöhung der Axialkraft, d. h. der Anpresskraft, ist es von Vorteil, wenn die Funktionsflächen in einem Winkel mit einem Absolutwert ausgewählt aus einem Bereich mit einer unteren Grenze von 10° und einer oberen Grenze von 89° gegen die Längserstreckung des Grundkörpers geneigt sind.

Die Funktionsflächen können auch in einem Winkel mit einem Absolutwert ausgewählt aus einem Bereich mit einer unteren Grenze von 25° und einer oberen Grenze von 70° bzw. einem ausgewählt aus einem Bereich mit einer unteren Grenze von 45° und einer oberen Grenze von 60° gegen die Längserstreckung des Grundkörpers geneigt sein.

Bezüglich der Winkel sei angemerkt, dass, nachdem im Prinzip nur eine Funktionsflächen für eine Schaltrichtung erforderlich ist, die Winkel der beiden Funktionsflächen auch unterschiedlich sein können, d.h. es sind auch asymmetrische Ausführungen des Kraftverstärkungsele**mentes möglich.**

Die Flächenpressung der Verstärkung kann weiters dadurch verbessert werden, dass die Funktionsflächen jeweils eine Größe aufweisen, die ausgewählt ist aus einem Bereich mit einer unteren Grenze von 10 mm² und einer oberen Grenze von 60 mm². Zudem ist damit die Druckverteilung positiv beeinflussbar.

Die Funktionsflächen können auch eine Größe aufweisen, die ausgewählt ist aus einem Bereich mit einer unteren Grenze von 30 mm² und einer oberen Grenze von 50 mm², bzw. die ausgewählt ist aus einem Bereich mit einer unteren Grenze von 35 mm² und einer oberen Grenze von 40 mm².

Es ist weiters möglich, dass ein Querschnitt des Grundkörpers in Richtung der Höhe zumindest annähernd u-förmig ausgebildet ist, wodurch die Einpassung des Kraftverstärkungselementes in die Nabe vereinfacht ist.

Weiters kann der Mittenbereich des Grundkörpers erhöht ausgebildet sein, sodass das Kraftverstärkungselement mit diesem Mittenbereich in der entsprechenden Aussparung der Synchronnabe angeordnet werden kann - ohne jedoch über diese vorzustehen - und die beiden schrägen Funktionsflächen in axialer Richtung von der Umfangsfläche der Nabe abgedeckt sind. Die Synchronnabe kann damit mehr Verzahnungszähne aufweisen.

Zur Erhöhung der Funktionssicherheit des Schaltvorganges ist es von Vorteil, wenn jeweils zumindest eine der Kanten der Funktionsflächen in Richtung der Höhe gebrochen ist, da damit der Eingriff der komplementären Funktionsfläche des jeweiligen Synchronringes einfacher erfolgen kann. Zudem ist damit eine einfachere Fertigung des Kraftverstärkungselementes möglich.

Gemäß einer weiteren Ausführungsvariante der Erfindung ist vorgesehen, dass an den in der Längserstreckung einander gegenüberliegenden distalen Endbereichen des Grundkörpers des Kraftverstärkungselementes jeweils ein kreisringausschnittförmig ausgebildetes Hebelelement angeordnet ist, sodass neben der Kraftverstärkung über die schiefe Ebene zusätzlich eine Kraftverstärkung aufgrund der Hebelwirkung diese Hebelelemente möglich wird.

Schließlich besteht die Möglichkeit, dass die Hebelelemente an den der Nabe zuwendbaren Funktionsflächen im Bereich von vom Grundkörper abgewandten Enden zumindest annähernd wulstartige Vorsprünge aufweisen, wodurch die Hebelwirkung verbessert und das Verkippen der Hebelelemente bei Kraftbeaufschlagung vereinfacht wird.

Die Ausnehmung der Synchronnabe im Bereich der Muffenverzahnung kann für einen verschleißunabhägigen Verstärkungsmechanismus einen Fixanschlag für einen Synchronring aufweisen.

Weiters können in der Ausnehmung der Synchronnabe Rampen mit Funktionsflächen angle-ordnet sein und die Muffenverzahnung sich über diese Rampen - in Umfangsrichtung betrachtet - erstrecken, wobei bevorzugt die Funktionsflächen an einem ringförmigen, unterbrochenen Steg ausgebildet sind.

Das Kraftverstärkungselement kann in der Getriebe-Synchronisationsvorrichtung am Synchronring eingriffsfrei anliegend ausgebildet sein. Der Synchronring muss damit keine Mitnehmerelemente für das Kraftverstärkungselement und für den inneren Reibring aufweisen, wie z.B. entsprechende Aussparungen bzw. Freistellungen, wie dies nach dem Stand der Technik der Fall ist, wodurch der Synchronring hinsichtlich seiner Geometrie einfacher ausgebildet und damit einfacher herstellbar ist.

Zum besseren Verständnis der Erfindung wird diese anhand der nachfolgenden Figuren näher erläutert.

Es zeigen jeweils in stark schematisch vereinfachter Darstellung:
- Fig. 1: einen Ausschnitt aus einer Getriebe-Synchronisationsvörrichtung im Axialschnitt;
- Fig. 2: den Ausschnitt nach Fig. 1 in Schrägansicht teilweise geschnitten;
- Fig. 3: eine erste Ausführungsvariante eines Kraftverstärkungselementes in Seitenansicht;
- Fig. 4: das Kraftverstärkungselement nach Fig. 3 in Frontansicht;
- Fig. 5: das Kraftverstärkungselement nach Fig. 3 in Draufsicht;
- Fig. 6: einen Ausschnitt aus einer weiteren Ausführungsvariante einer erfindungsgemäßen Getriebe-Synchronisationsvorrichtung in Explosionsdarstellung;
- Fig. 7: ein Detail der Getriebe-Synchronisationsvorrichtung nach Fig. 6 mit einer Ausführungsvariante des Kraftverstärkungselementes;
- Fig. 8: eine andere Ausführungsvariante eines Kraftverstärkungselementes in Seitenansicht;
- Fig. 9: das Kraftverstärkungselement nach Fig. 8 in Frontansicht;
- Fig. 10: das Kraftverstärkungselement nach Fig. 8 in Draufsicht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind bei einer Lageänderung sinngemäß auf die neue Lage zu übertragen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

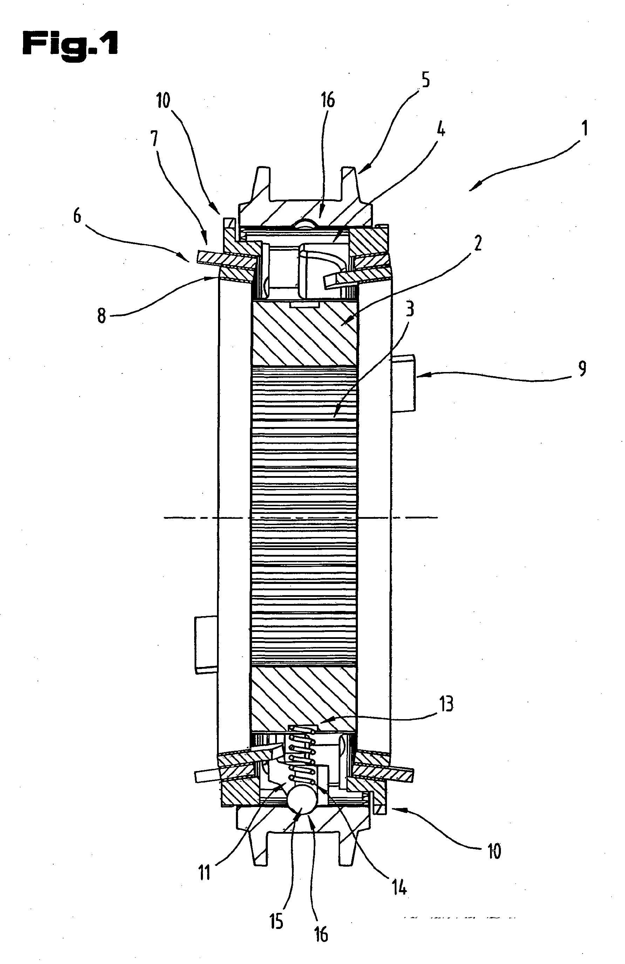

Fig. 1 zeigt einen Axialschnitt durch einen Ausschnitt aus einer Getriebe-Synchronisationsvorrichtung 1. Da diese Getriebe-Synchronisationsvorrichtung 1 ähnlich dem Borg-Wamer-Typ ist, und dieser ausreichend in der einschlägigen Literatur beschrieben und dem Fachmann bekannt ist, erübrigt sich an dieser Stelle eine weitere Erörterung von dessen prinzipieller Funktionsweise.

Diese Getriebe- Synchronisationsvorrichtung 1 ist bei dieser Ausführung dazu ausgelegt, zwei benachbarte Losräder, also Gangzahnräder (nicht dargestellt) wahlweise mit einer Welle (nicht dargestellt) drehfest zu koppeln oder hiervon zu lösen.

Es besteht im Rahmen der Erfindung aber auch die Möglichkeit der Ausbildung einer einseitigen Synchronisationsvorrichtung, sodass also nur ein Losrad bzw. die zugehörigen Baugruppenteile, wie Reibpaket, Synchronring, Kupplungskörper, etc., ebenfalls nur einfach vorhanden sein können.

Die Getriebe- Synchronisationsvorrichtung 1 umfasst eine Synchronnabe 2 mit einer inneren Steckverzahnung 3 zur drehfesten Verbindung der Synchronnabe 2 mit der Welle, sowie eine äußere Muffenverzahnung 4. Die Synchronnabe 2 ist mit herkömmlichen Mitteln axial unverschiebbar an der Welle angeordnet. An der Synchronnabe 2 ist eine Schiebemuffe 5 drehfest, jedoch axial verschiebbar gelagert. Diese ist somit von einer Schaltgabel (nicht gezeigt) betätigbar.

Weiters umfasst die Getriebe-Synchronisationsvorrichtung 1 je Schaltrichtung ein Reibpaket 6 zumindest bestehend aus einem äußeren Konusring 7 und einem inneren Konusring 8, wobei auf den Konusringen 7, 8 an den entsprechenden zusammenwirkenden Oberflächen übliche Reibbeläge vorgesehen sind. Der äußere Konusring 7 weist zumindest einen Vorsprung 9 auf, der in Drehrichtung formschlüssig mit einem Kopplungskörper (nicht dargestellt) verbunden ist. Der Kupplungskörper ist drehfest mit dem jeweiligen Losrad, also dem Gangrad, verbunden. Beispielsweise kann der Kupplungskörper auf einem Konus des Losrades verdrehfest aufsitzen, wobei am Kupplungskörper entsprechende Freistellungen und am Konus des Losrades dazu komplementäre Nocken vorhanden sein können.

Andererseits ist es möglich, dass das Gangrad bspw. einen Konus aufweist, mit einer Stirnverzahnung, und der Kupplungskörper eine dazu passende Stimverzahnung aufweist, wodurch die drehfeste Anordnung des Kupplungskörpers am Gangrad ermöglicht wird.

Radial außen und oberhalb des Reibpaketes 6 ist jeweils beidseitig der Synchronnabe 2 ein Synchronring 10 angeordnet.

Zwischen der Synchronnabe 2 und der Schiebemuffe 5 einerseits und in axialer Richtung zwischen den Reibpaketen 6 andererseits ist zumindest ein Kraftverstärkungselement 11 derart angeordnet, dass dieses über ein Federelement 12, das in einer Ausnehmung 13, insbesondere einer Sacklochbohrung, der Synchronnabe 2 einerseits und einer Ausnehmung 14 im Kraftverstärkungselement 11 andererseits angeordnet ist, gegen die Schiebemuffe 5 über eine, an einer dem Federelement 12 gegenüberliegenden Seite des Kraftverstärkungselementes 11 angeordnete Kugel 15, welche ihrerseits in einer weiteren Ausnehmung 14, insbesondere einer Sacklochbohrung, einerseits und andererseits in einer Ausnehmung 16 an der Unterseite der Schiebemuffe 5 angeordnet ist, welche der Synchronnabe 2 zugewandt ist, vorgespannt ist. Die Ausnehmung 14 kann auch durch das Kraftverstärkungselement durchgängig ausgebildet sein. Anstelle einer Kugel kann auch bei entsprechender Adaptierung der Aufnahme derselben eine Rolle, bzw. generell ein Wälzkörper verwendet werden. Ebenso ist es möglich auf die Federvorspannung zu verzichten und die Positionierung des Kraftverstärkungselementes 11 über die während des Betriebes der Getriebe-Synchronisationsvorrichtung auftretenden Fliehkräfte zu bewerkstelligen.

Das Federelement 12 kann wie im dargestellten Ausführungsbeispiel als Spiralfeder ausgeführt sein, ebenso ist bei geringfügiger Adaptierung die Ausbildung mit einem Plattfederelement, einer Ringfeder oder einer Gasfeder möglich.

Das in den Reibpaketen 6 anliegende Reibmoment während des Schaltvorganges wird unter anderem durch die Federrate des Federelementes 12 bestimmt.

Selbstverständlich ist es im Rahmen der Erfindung möglich, dass über den Umfang der Synchronnabe 2 verteilt mehrere dieser Federelemente 12 in der Getriebe- Synchronisationsvorrichtung 1 angeordnet sind, insbesondere zwei oder drei pro Schaltrichtung bzw. Synchronisationsrichtung.

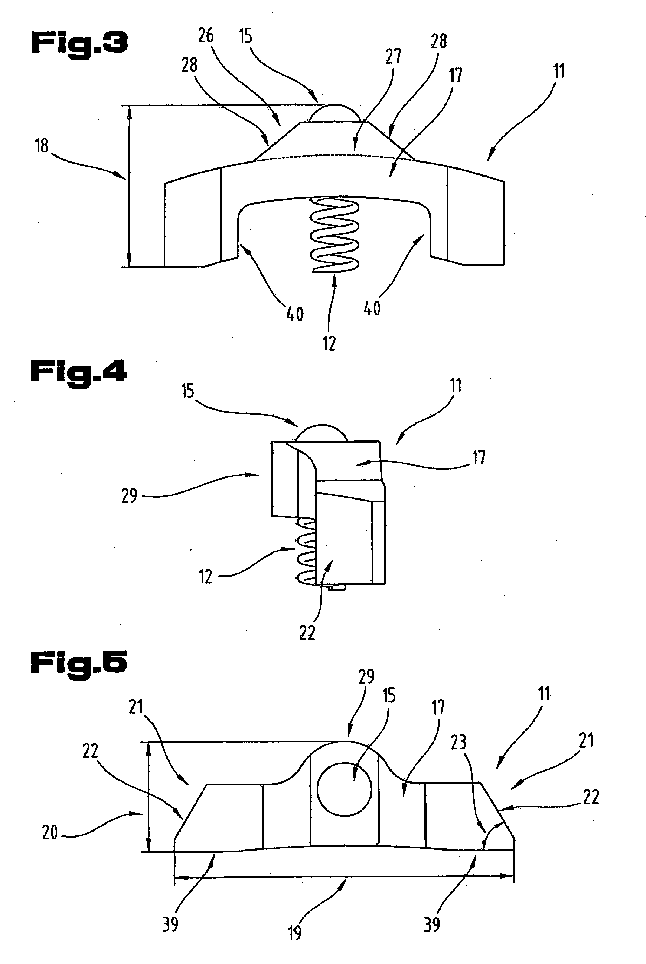

Das Kraftverstärkungselement 11 stellt den Kern der Erfindung dar. Durch dieses wird eine an dem Kraftverstärkungselement 11 anliegende Umfangskraft, welche durch das Reibmoment am Reibpaket 6 beim Synchronisationsvorgang hervorgerufen wird, in eine zusätzliche Axialkraft umgewandelt und damit eine Kraftverstärkung erreicht. Wesentliches Merkmal dieses Kraftverstärkungselementes 11 ist ein verschleißunabhängiger Verstärkungsmechanismus, d.h., dass sich ein aufgrund des Verschleißes im Reibpaket 6 ergebender größerer Axialweg keinen Einfluss auf den Verstärkungsmechanismus hat: Es gibt also keine Änderung der Stellung Sperrverzahnung/Schiebemuffe, wie dies z.B. bei dem aus dem Stand der Technik bekannten H-förmigen Druckstück der Fall ist, bei dem der Kontaktpunkt nach außen wandert und damit die Synchronstellung immer weiter in Umfangsrichtung verschoben wird. Bei der Erfindung wird dies durch einen Fixanschlag des Synchronringes 10 in der Ausnehmung in der Synchronnabe 2, welche das Kraftverstärkungselement 11 aufnimmt, erreicht. Das Kraftverstärkungselement 11 dieser ersten Ausführungsvariante ist besser aus den Fig. 3 bis 5 ersichtlich, welche das Kraftverstärkungselement 11 in unterschiedlichen Ansichten darstellen.

Wie aus Fig. 3 ersichtlich ist, weist bei dieser Ausführungsvariante das Kraftverstärkungselement 11 in Seitenansicht betrachtet einen annähernd u-förmigen Querschnitt auf. Mittig, d.h. zwischen den beiden Schenkeln dieses Profilquerschnitts ist das Federelement 12 sowie die Kugel 15 wie voranstehend beschrieben angeordnet.

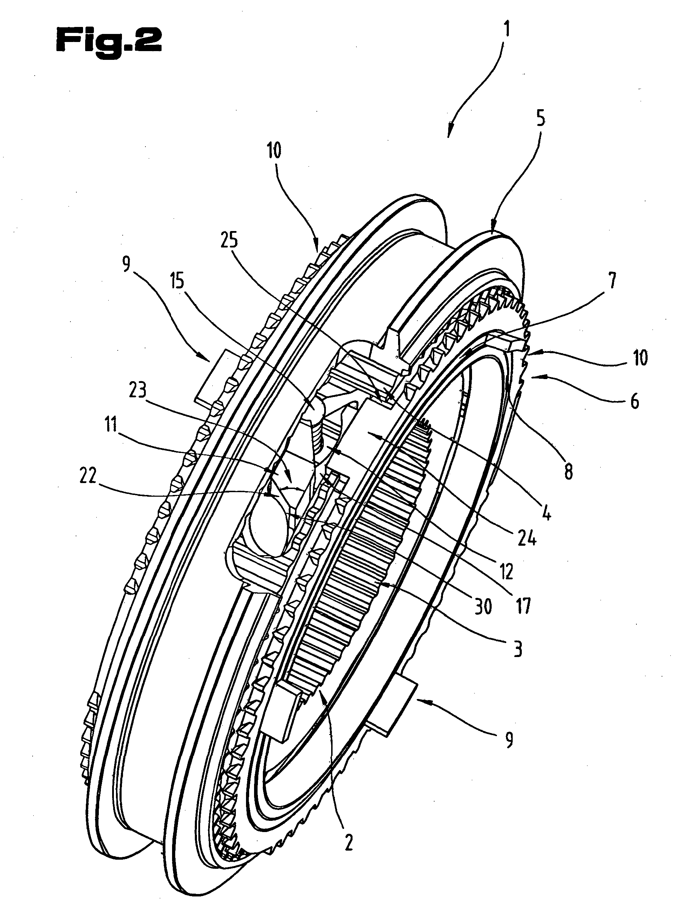

Das Kraftverstärkungselement 11 weist einen Grundkörper 17 auf, der eine Höhe 18, eine Längserstreckung 19 sowie eine Breitenerstreckung 20 aufweist. In Richtung der Längserstreckung 19 einander gegenüberliegenden, distalen Endbereichen 21 ist jeweils eine schräge Funktionsfläche 22 derart ausgebildet, dass diese senkrecht auf eine durch die Längserstreckung 19 und die Breitenerstreckung 20 definierte Querschnittsebene steht. Erfindungsgemäß sind diese Funktionsflächen 22 in entgegengesetzter Richtung, vorzugsweise gegengleich (es sind im Rahmen der Erfindung hinsichtlich der Winkel auch asymmetrische Ausführungen möglich), gegen die Längserstreckung 19 geneigt ausgebildet, wobei die Funktionsflächen 22 jeweils in einem spitzen Winkel 23 zur größten Längserstreckung des Grundkörpers 17 orientiert sind. Dabei ist diese größte Längserstreckung des Grundkörpers 17 an der Rückseite des Kraftverstärkungselementes 11 ausgebildet, welche teilweise neben einem nockenartigen Vorsprung 24 - in radialer Richtung - des Synchronringes 10 anliegt, wie dies besser aus Fig. 2 ersichtlich ist. Anders ausgedrückt verlaufen die Fünktionsflächen 22 schräg gegenüber der Drehebene des Synchronringes 10.

Zumindest eine der Funktionsflächen 22 muss aber nicht zwingenderweise senkrecht auf die besagte Querschnittsebene stehen, sondern kann auch in einem Winkel zu dieser angeordnet sein, also schief zu dieser stehen. Der Winkel kann dabei ausgewählt sein aus einem Bereich mit einer unteren Grenze von 1 ° und einer oberen Grenze von 75 °, bzw. aus einem Bereich mit einer unteren Grenze von 10 ° und einer oberen Grenze von 65 °, bzw. aus einem Bereich mit einer unteren Grenze von 15 ° und einer oberen Grenze von 55 °.

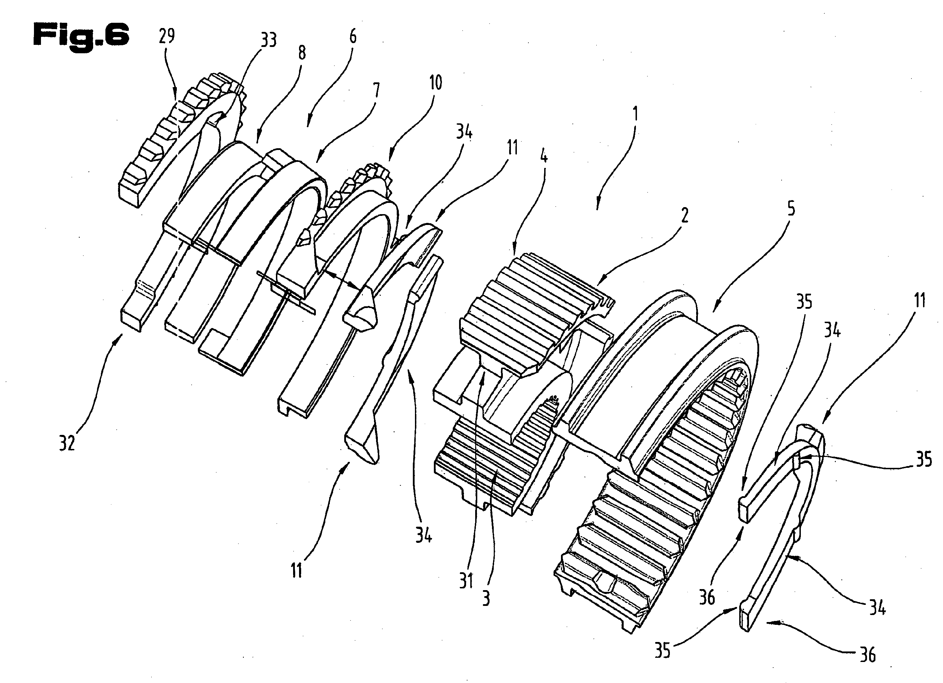

Das Kraftverstärkungselement 1 greift an der Stirnfläche des Synchronringes 10 an, welche in Richtung auf die Synchronnabe 2 weist. Durch die Freistellung im Kraftverstärkungselement 1 im Bereich des Synchronringes, weist das Krafterstärkungselement 1 zwei Anlageflächen am Synchronring 10 auf. Dies hat insbesondere den Vorteil, dass bei Vorhandensein von mehreren Kraftverstärkungselementen 1 über den Umfang der Synchronnabe 2 eine bessere Kraftverteilung möglich ist. Beispielsweise erhält man also bei drei Kraftverstärkungselementen 1 sechs Angriffs- bzw. Funktionsflächen. Insbesondere liegt die Angriffsfläche zumindest annähernd auf der gleichen Höhe bzw. in der gleichen Ebene, auf der bzw. in der die Druckkraft auf der schiefen Ebene bzw. Rampe in der Synchronnabe 2 ausgeübt wird, damit kein zusätzliches Moment übertragen wird und damit einem Verkippen vorgebeugt werden kann. Die Kontaktfläche bzw. der Kontaktpunkt ist schematisch in Fig. 6 mit einem Doppelpfeil dargestellt.

Der nockenartige Vorsprung 24 wirkt mit dem Fixanschlag der Synchronnabe 2 zusammen, wie dies voranstehend beschrieben ist, und begrenzt somit seine Beweglichkeit in Umfangsrichtung.

Bekanntlich weist die Synchronnabe 2 an ihrem äußeren Umfang, d.h. im Bereich der Muffenverzahnung 4 über den Umfang verteilt mehrere Ausnehmungen 25 auf, in die die nockenartigen Vorsprünge der Synchronringe 10 eingreifen, sodass also auch das oder die Kraftverstärkungselement(e) 11 in diesen Ausnehmungen 25 zumindest teilweise angeordnet ist. Dazu weist das Kraftverstärkungselement 11 in einem Mittenbereich 26 bei dieser Ausführungsvariante, d.h. im Bereich der Basis des u-förmigen Querschnittes, eine Erhebung 27 auf, die zumindest teilweise in diese Ausnehmung 25 (in radialer Richtung) ragt bzw. von dieser aufgenommen ist.

Die Erhebung 27 ist bei dieser Ausführungsform im Querschnitt betrachtet trapezförmig ausgebildet mit insbesondere gegengleich in Richtung auf die distalen Funktionsflächen 22 schräg abfallenden Rampen 28. Es besteht allerdings auch die Möglichkeit, dass diese Querschnittsform der Erhebung 27 im Rahmen der Erfindung geändert wird, bspw. diese durch eine stegartige Erhöhung des Mittenbereichs 26 gebildet ist. Eine Breite in Längserstreckung 19 dieser Erhebung 27 ist so bemessen, dass die Anordnung des Kraftverstärkungselementes 11 mit der Erhebung in der Ausnehmung 25 der Synchronnabe 2 ermöglicht wird. Durch die Ausbildung dieser Erhebung 27 mit trapezförmigem Querschnitt wird die relative Verstellbarkeit des Kraftverstärkungselementes 11 zur Synchronnabe 2, d.h. die Anordnung des Kraftverstärkungselementes 11 in der Ausnehmung 25 vereinfacht. Die Höhe dieser Erhebung 27 entspricht zumindest annähernd der Verzahnungshöhe der Synchronnabe 2.

Der Winkel 23, in dem die Funktionstlächen 22 zur größten Längserstreckung 19 des Kraftverstärkungselementes 11 verlaufen, weist bei dieser Ausführungsvariante des Kraftverstärkungselementes 11 einen Absolutwert von 60° auf. Generell kann dieser Winkel im Rahmen der Erfindung aber auch aus den voranstehend genannten Bereichen ausgewählt werden

Weiters weisen die Funktionsflächen 22 eine Größe von ca. 38 mm² auf. Diese kann aber generell im Rahmen der Erfindung aber aus einem der voranstehend genannten Bereiche ausgewählt werden.

Obwohl die flächige Anlage der Funktionsflächen 22 an die entsprechenden Rampen der Synchronnabe 2 die bevorzugt Ausführung ist, besteht im Rahmen der Erfindung auch die Möglichkeit einer Punktauflage bzw. Linienauflage der Funktionsflächen 22 an den Rampen, insbesondere wenn durch eine Kippbewegung des Kraftverstärkungselementes 11 eine zusätzliche Kraftverstärkung hervorgerufen werden soll. Dazu können entweder die Rampen in der Synchronnabe 2 oder die Funktionsflächen 22 gekrümmt ausgeführt sein.

Wie insbesondere aus Fig. 4 ersichtlich ist, müssen diese Funktionsflächen 22 nicht zwangsweise quadratisch oder rechteckig ausgebildet sein, sondern können aufgrund der schräg nach unten gerichteten Seitenbereiche der Basis des u-förmigen Querschnittes, wie dies insbesondere aus Fig. 3 ersichtlich ist, auch eine davon verschiedene Querschnittsform aufweisen.

Die Kante, die zwischen der Funktionsfläche 22 und der größten Längserstreckung 19 des Grundkörpers 17 ausgebildet wird, kann gebrochen ausgebildet sein, wie dies insbesondere aus Fig. 4 oder Fig. 5 ersichtlich ist.

Eine nach vorne weisende Stirnfläche 29 des Kraftverstärkungselementes 11, d.h. die in Richtung auf die in der gedachten Verlängerung der Funktionsflächen 22 durch diese gebildete Schnittkante weisende Stirnfläche 29, ist gerundet ausgebildet. In einer Abwandlung dazu besteht auch die Möglichkeit, dass diese Stirnfläche 29 im wesentliche ebenflächig ausgebildet ist und dafür Übergangsbereiche zu daran anschließenden Flächen mit Rundungen versehen sind.

Durch diese gerundete Stirnfläche 29 bzw. die gerundeten Flächen wird der Kugel 15 eine bessere Aufnahme im Kraftverstärkungselement 11 ermöglicht.

Die Synchronnabe 2 weist unterhalb der Muffenverzahnung 4 und oberhalb der Steckverzahnung 3 in der Ausnehmung 25 zu den Funktionsflächen 22 zumindest annähernd komplementär verlaufende schräge Funktionsflächen 30, d.h. die bereits erwähnten Rampen (Fig. 2) auf, die gegebenenfalls gerundet ausgeführt sein können, wobei die Muffenverzahnung 4 sich über diesen schrägen Funktionsflächen 30 in Umfangsrichtung erstreckt. Dazu weist die Synchronnabe 2 einen sich in Umfangsrichtung sich erstreckenden ringförmigen Steg 31 (Fig. 6) auf, an dem diese Funktionsflächen 30 ausgebildet sind. Der Abstand in Umfangsrichtung zwischen den beiden Funktionsflächen 30 ist dabei so bemessen, dass das Kraftverstärkungselement 11 mit einem Spiel zwischen den Funktionsflächen 22 und den Funktionsflächen 30 angeordnet werden kann, also dessen Verdrehung bzw. Axialverschiebung in der Ausnehmung 25 möglich ist, oder das das Kraftverstärkungselement 11 in Neutralstellung an diesen Funktionsflächen 30 anliegt und während der Synchronisation an diesen abgleitet. Durch die Verdrehung bzw. Axialverschiebung des Kraftverstärkungselementes 11, verursacht durch die Verschiebung der Schiebemuffe 5 und die Kopplung mit dem inneren Konusring 8, wird durch die schrägen Funktionsflächen 22 eine Servokraft zusätzlich zur Axialkraft aufgrund der Schaltkraft über die Schaltgabel, die in die Schiebemuffe 5 eingreift, erzeugt und damit eine Kraftverstärkung hervorgerufen. Diese Kraftverstärkung ist dabei unabhängig vom Verschleiß in den Reibpaketen 6, wie dies bereits voranstehend ausgeführt wurde.

Bei der erfindungsgemäßen Getriebe-Synchronisationsvorrichtung 1 erfolgt die Kopplung des inneren Konusringes 8, d.h. des Reibringes, nicht zum Synchronring 10 sondern zum Kraftverstärkungselementes 11, sodass der Synchronring 10 baulich einfacher ausgeführt werden kann. Der Synchronring 10 weist also zum Unterschied zum Synchronring der Synchronisationsvorrichtung z.B. nach der DE 694 06 413 T2 bzw. der Borg-Warner Synchronisation keine in axialer Richtung bzw. radialer Richtung nach unten vorspringende Koppelelemente oder Fortsätze als Anschlagflächen für Federelemente auf. Dessen auf die Synchronnabe 2 weisende Stirnfläche ist als zumindest in wesentlichen ebenflächig ausgebildet.

Initiiert durch die axiale Verschiebung der Schiebemuffe 5, beispielsweise ausgelöst durch den Schaltvorgang eines Fahrers, wird im Reibpaket 6 ein Reibmoment über die Konusringe 7, 8 durch die Verschiebung des Kraftverstärkungselementes 11 in axialer Richtung durch Abgleiten der Funktionsfläche 22 entlang der Rampe/Funktionsfläche 30 der Synchronnabe 2 erzeugt. Dieses Reibmoment wirkt über den inneren Konusring 8 auf das Kraftverstärkungselement 11, sodass dieses verdreht und/gegebenenfalls verkippt wird, wie dies untenstehend noch erläutert wird, und damit die verstärkende Servokraft und gegebenenfalls Hebelwirkung erzeugt wird. Der Synchronring 10 wird durch das Kraftverstärkungselement 11 ebenfalls in Schaltrichtung auf das gewünschte Gangrad axial verschoben und durch das Abgleiten der Verzahnung der Schiebemuffe auf den Dachschrägen auf den Kupplungszähnen des Synchronringes 10 verdreht, bis dieser seine Synchronisationsstellung erreicht und die Schiebemuffe 5 unter Überdrückung der Federkraft des Federelementes 11 die Wirkverbindung mit dem gewünschten Gangrad herstellen kann. Gleichzeitig werden über die Vorsprünge 9 des äußeren Konusringes 7 der dem Gangrad zugehörige Kupplungskörper, und damit das Gangrad bis zur Kupplung in Kupplungsseite in die Synchronstellung verdreht.

Das Kraftverstärkungselement 11 wird in der Getriebe-Synchronisationsvorrichtung 1 nach der Erfindung in axialer Richtung und in Umfangsrichtung bewegt, eine radiale Bewegung erfolgt nicht (mit Ausnahme des Federelementes 12).

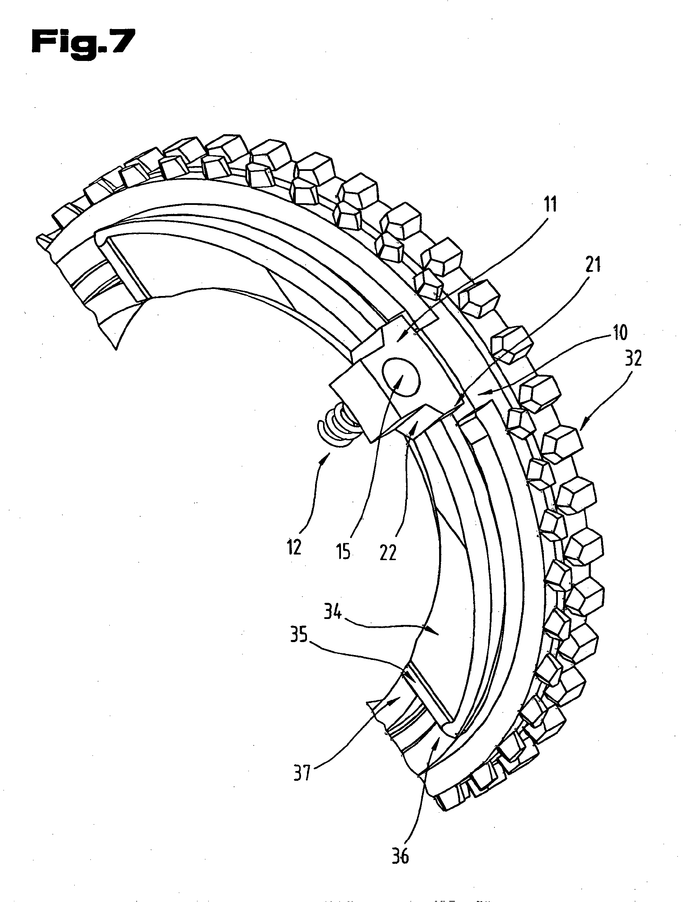

Die Fig. 6 und 7 zeigen eine Ausführungsvariante der Getriebe- Synchronisationsvorrichtung 1, wobei diese ausschnittsweise in Explosionsdarstellung in der Fig. 6 gezeigt ist, sowie in Fig. 7 das erfindungswesentliche Detail des Kraftverstärkungselementes 11. Dabei sind gleiche Teile mit gleichen Bezugszeichen versehen, sodass hierzu auf die Ausführungen zu den Fig. 1 bis 5 verwiesen sei.

Es sei nochmals darauf hingewiesen, dass in den Figuren nicht eine gesamte Getriebe- Synchronisationsvorrichtung 1 eines Mehrgangwechselgetriebes aus Übersichtsgründen dargestellt ist, sondern nur jene für die Erfindung wesentlichen Elemente derselben, um deren Funktionsweise zu verstehen. Es sei hierzu auf die einschlägige Literatur verwiesen, z.B. auf den Borg-Warner-Typ. Generell kann die Kraftverstärkung auch für einseitige Synchronisationen verwendet werden.

Zusätzlich dargestellt in Fig. 6 ein Kupplungskörper 32 der eine Ausnehmung 33 aufweist, in die ein Vorsprung 9 des äußeren Konusringes 7 des Reibpaketes 6 eingreift.

Bei dieser Ausführungsvariante des Kraftverstärkungselementes 11 ist die Brechung der vorgenannten Kante, welche unter Ausbildung des spitzen Winkels 23 zwischen der größten Längserstreckung 19 des Grundkörpers 17 sowie den Funktionsflächen 22 ausgebildet ist (Fig. 5) so breit durchgeführt, dass daran anschließend an die distalen Endbereiche 21 des Grundkörpers 17 pro Funktionsfläche 22 jeweils ein kreisringausschnittförmig ausgebildetes Hebelelement 34 angeformt ist. Wie dies insbesondere aus Fig. 7 ersichtlich ist, welches eine Variante der Hebelelemente 34 zeigt, liegen dieses an dem Reibpaket 6 zumindest bereichsweise an.

Diese Hebelelemente 34 können zumindest auf der der Synchronnabe 2 zugewandten Oberfläche jeweils zumindest einen wulstartigen Vorsprung 35 in vom Grundkörper 17 abgewandten Endbereichen 36 aufweisen, bzw. können diese gemäß einer weiteren Ausführungsvariante auch auf der Rückseite und von den Endbereichen 32 weiter entfernt in Richtung aufden Grundkörper 17 liegend jeweils zumindest einen derartigen wulstförmige Vorsprung aufweisen. Über diese Vorsprünge 35 wird insbesondere das Verkippen der Hebelelemente 34 und damit des gesamten Kraftverstärkungselementes 11 erleichtert, sodass durch das Verkippen eine Hebelwirkung auftritt und zusätzlich zur Verstärkung über die schiefen Funktionsflächen 22 aufgrund einer Servowirkung eine Verstärkung aufgrund der Hebelwirkung mit Hilfe dieser Hebelelemente 34 der aufgebrachten Axialkraft erreicht werden kann.

Diese Hebelelemente 34 erstrecken sich bis zur Anlage an Vorsprünge 37 des inneren Konusringes 8, wobei diese Vorsprünge (zwei pro inneren Konusring 8) symmetrisch einander gegenüberliegend angeordnet sein können.

Die in den Endbereichen 36 der Hebelelemente 34 angeordneten Vorsprünge 35 bilden die Stelle für die Einleitung des Drehmomentes in das Kraftverstärkungselement 11, wobei die weiteren wulstartigen Vorsprünge an der dem Synchronring 10 zugewandten Rückseite der Hebelelemente 34 den Druckpunkt für die weitere Verstärkungskraft auf den Synchronring 10 bilden können. Da das Kraftverstärkungselement 11 auch die schrägen Funktionsflächen 22 aufweist, erfolgt auch die Kraftverstärkung über die erzeugt Servokraft wie dies voranstehend beschrieben wurde.

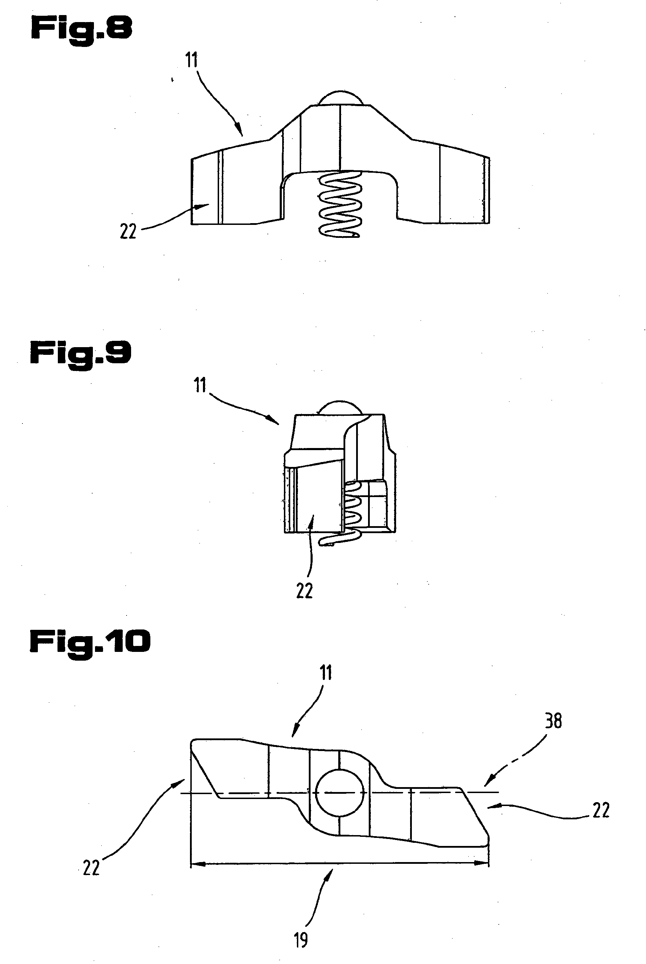

In den Fig. 8 bis 10 ist eine andere Ausführungsvariante des Kraftverstärkungselementes 11 dargestellt. Wesentlicher Unterschied zum Kraftverstärkungselement nach den Fig. 3 bis 5 ist dabei, das die beiden Funktionsflächen 22 nicht mehr in entgegen gesetzter Richtung in Bezug auf die Längserstreckung 19 sondern in gleicher Richtung geneigt sind und in Bezug auf eine Längsmittelachse 38 in Richtung der Längserstreckung 19 versetzt angeordnet sind, wie dies insbesondere aus der Draufsicht nach Fig. 10 ersichtlich ist. Die beiden Funktionsflächen 22 verlaufen dabei bevorzugt zumindest annähernd parallel zueinander.

Prinzipiell müsste für die Synchronisierung in einer Richtung nur eine der Funktionsflächen 22 angeordnet sein, jedoch bietet die Ausführung nach den Fig. 8 bis 10 den Vorteil, dass damit das Kraftverstärkungselement 11 auch um 180 ° gedreht eingebaut werden kann, was insbesondere in Hinblick auf die Montage eine Erleichterung darstellt. Es ist weiters mit dieser Ausführungsvariante ein zweiseitige Wirkung des Kraftverstärkungselementes 11 möglich, sodass also dieses nicht nur in einer Schaltrichtung wirkt, da das Kraftverstärkungselement 11 mittig in der Ausnehmung 25 der Synchronnabe 2 mit der Längserstreckung 19 in Umfangsrichtung der Synchronnabe 2 angeordnet werden kann.

Die (beiden) Funktionsfläche(n) 22 wirken bzw. wirkt wiederum mit den beiden bzw. einer Rampe(n) an der Synchronnabe 2, die komplementär zu den Funktionsflächen 22 ausgeführt sind bzw. ist, d.h. den bzw. der Funktionsfläche(n) 30 (Fig. 2), zur Kraftverstärkung zusammen.

Da das Kraftverstärkungselement 11 im Übrigen ähnlich zum Kraftverstärkungselement 11 nach den Fig. 3 bis 5 ist, sei zu den weiteren Details und der prinzipiellen Wirkungsweise auf voranstehende Ausführungen verwiesen.

Neben den Funktionsflächen 22 weisen die Verstärkungselemente 11 weitere Funktionsflächen 39, 40 (Fig. 5 bzw. Fig. 3) auf, nämlich die Angriffsflächen für den Synchronring 10 (Funktionsflächen 39) an den beiden distalen Endbereichen 21 im Anschluss an die Funktionsflächen 22, die mit diesen den spitzen Winkel 23 ausbilden, bzw. entsprechend obigen Ausführungen nur eine hiervon, und aufgrund des Federelementes 12 an der Innenfläche der Endbereiche 21, die diesem Federelement 12 gegenüber liegt. Zwischen den Funktionstlächen 39 ist auch die voranstehend angesprochene Freistellung im Kraftverstärkungselement 11 für den Synchronring 10 ausgebildet. Die Funktionsflächen 40 wirken bei der Rückstellung des Kraftverstärkungselementes 11.

Das Kraftverstärkungselement 11 weist also maximal nur zwei Funktionsflächen 22 auf, die mit der bzw. den Rampen der Synchronnabe 2 zusammenwirken.

In Fig. 3 ist strichliert noch eine andere Ausführungsvariante des Kraftverstärkungselementes 11 gezeigt, bei dem auf die trapezförmige Erhebung 27 verzichtet wurde. Diese hat jedoch den Nachteil, dass die Anzahl der Verzahnungszähne an der Synchronnabe 2 geringer ist.

Vorzugsweise wird bei allen Ausführungsvarianten der Erfindung wird das Kraftverstärkungselement 11 nicht in der Schiebemuffe 5 geführt. Hiervon ist jedoch die Anlage der Kugel 15 wie voranstehend beschrieben nicht betroffen.

Dadurch, dass das Kraftverstärkungselement 11 nach der Erfindung als Zwischenelement zu verstehen ist und nur an dem Synchronring 10 anliegt, wird eine bessere Rückstellung desselben erreicht. Die Rückstellung erfolgt, wenn das erzeugte Reibmoment wieder kleiner wird.

Die Ausführungsbeispiele zeigen mögliche Ausführungsvarianten des Kraftverstärkungselementes 11, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Ordnung halber sei abschließend darauf hingewiesen, dass zum besseren Verständnis des Aufbaus Kraftverstärkungselementes 11 dieses bzw. dessen Bestandteile teilweise unmaßstäblich und/oder vergrößert und/oder verkleinert dargestellt wurden.

Die den eigenständigen erfinderischen Lösungen zugrunde liegende Aufgabe kann der Beschreibung entnommen werden.

Vor allem können die einzelnen in den Fig. 1,2; 3, 4, 5; 6, 7; 8, 9, 10 gezeigten Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

**Bezugszeichenaufstellung**

| | | | |
|---|---|---|---|
| 1 | Getriebe-Synchronisationsvorrichtung | 36 | Endbereich |
| 2 | Synchronnabe | 37 | Vorsprung |
| 3 | Steckverzahnung | 38 | Längsmittelachse |
| 4 | Muffenverzahnung | 39 | Funktionsfläche |
| 5 | Schiebemuffe | 40 | Funktionsflächen |
| | | | |
| 6 | Reibpaket | | |
| 7 | Konusring | | |
| 8 | Konusring | | |
| 9 | Vorsprung | | |
| 10 | Synchronring | | |
| | | | |
| 11 | Kraftverstärkungselement | | |
| 12 | Federelement | | |
| 13 | Ausnehmung | | |
| 14 | Ausnehmung | | |
| 15 | Kugel | | |
| | | | |
| 16 | Ausnehmung | | |
| 17 | Grundkörper | | |
| 18 | Höhe | | |
| 19 | Längserstreckung | | |
| 20 | Breitenerstreckung | | |
| | | | |
| 21 | Endbereich | | |
| 22 | Funktionsfläche | | |
| 23 | Winkel | | |
| 24 | Vorsprung | | |
| 25 | Ausnehmung | | |
| | | | |
| 26 | Mittenbereich | | |
| 27 | Erhebung | | |
| 28 | Rampe | | |
| 29 | Stirnfläche | | |
| 30 | Funktionsfläche | | |
| | | | |
| 31 | Steg | | |
| 32 | Kupplungskörper | | |
| 33 | Ausnehmung | | |
| 34 | Hebelelement | | |
| 35 | Vorsprung | | |

## Patentansprüche

1. Getriebe-Synchronisationsvorrichtung (1) mit zumindest einer auf einer Welle anordenbaren Synchronnabe (2), an der in axialer Richtung gegenüberliegend zumindest ein Synchronring (10) angeordnet ist, zumindest einem, auf der Welle anordenbaren Gangzahnrad, zumindest einem Reibpaket, das unterhalb des Synchronringes und mit diesem in Wirkverbindung stehend angeordnet ist, sowie mit zumindest einer, über der Nabe anordenbaren Schiebemuffe, wobei zwischen dem Gangzahnrad und dem Synchronring (10) ein Kupplungskörper (29) angeordnet ist und wobei die Synchronnabe (2) zumindest eine Ausnehmung (13) aufweist, in der zumindest ein federbelastetes Kraftverstärkungselement (11) angeordnet ist, das einen Grundkörper (17), der eine Höhe (18) und - in Draufsicht betrachteteine Längserstreckung (19) und eine Breitenerstreckung (20) aufweist, wobei die Längserstreckung in Umfangsrichtung der Synchronnabe (2) angeordnet ist, und der in Richtung der Längserstreckung (19) zwei einander gegenüberliegende, distale Endbereiche (21) aufweist, an denen jeweils eine Funktionsfläche (22) ausgebildet ist, die im eingebauten Zustand mit der Synchronnabe (2) zusammenwirken, wobei die Funktionstlächen (22) in entgegengesetzter Richtung, insbesondere gegengleich, und gegen die Längserstreckung (19) geneigt oder entlang einer Längsmittelachse (38) in Richtung der Längserstreckung (19) des Grundkörpers (17) versetzt und vorzugsweise zumindest annähernd parallel zueinander verlaufend ausgebildet sind, und wobei die Funktionsflächen (22) jeweils in einem spitzen Winkel (23) zur größten Längserstreckung (19) des Grundkörpers (11) orientiert sind, **dadurch gekennzeichnet, dass** der Grundkörper (17) die größte Längserstreckung (19) auf der dem Synchronring zugewandten Seite in der axialen Richtung aufweist.

2. Getriebe-Synchronisationsvorrichtung (1) nach Anspruch 1, **dadurch gekennzeichnet, dass** der Winkel (23) des Kraftverstärkungselementes (11) einen Absolutwert aufweist, der ausgewählt aus einem Bereich mit einer unteren Grenze von 10 ° und einer oberen Grenze von 89°.

3. Getriebe-Synchronisationsvorrichtung (1) nach Anspruch 1 oder 2, **dadurch gekennzeichnet, dass** die Funktionsflächen (22) des Kraftverstärkungselementes (11) eine Größe aufweisen, ausgewählt aus einem Bereich mit einer unteren Grenze von 10 mm² und einer oberen Grenze von 60 mm².

4. Getriebe-Synchronisationsvorrichtung (1) nach einem der vorhergehenden Ansprüche, **dadurch gekennzeichnet, dass** ein Querschnitt des Grundkörpers (17) des Kraftverstärkungselementes (11) in Richtung der Höhe (18) zumindest annähernd u-förmig ausgebildet ist.

5. Getriebe-Synchronisationsvorrichtung (1) nach einem der vorhergehenden Ansprüche, **dadurch gekennzeichnet, dass** ein Mittenbereich (26) des Grundkörpers (17) des Kraftverstärkungselementes (11) erhöht ausgebildet ist.

6. Getriebe-Synchronisationsvorrichtung (1) nach einem der vorhergehenden Ansprüche, **dadurch gekennzeichnet, dass** jeweils zumindest eine der Kanten der Funktionsflächen (22) des Kraftverstärkungselementes (11) in Richtung der Höhe (18) gebrochen sind.

7. Getriebe-Synchronisationsvorrichtung (1) nach einem der vorhergehenden Ansprüche, **dadurch gekennzeichnet, dass** an den in der Längserstreckung (19) einander gegenüberliegenden, distalen Endbereichen (21) des Grundkörpers (17) des Kraftverstärkungselementes (11) jeweils ein kreisringausschnittförmig ausgebildetes Hebelelement (34) angeordnet ist.

8. Getriebe-Synchronisationsvorrichtung (1) nach Anspruch 7, **dadurch gekennzeichnet, dass** die Hebelelemente (34) an den der Synchronnabe (2) zuwendbaren Flächen im Bereich von vom Grundkörper (17) abgewandten Enden zumindest annähernd wulstartige Vorsprünge (35) aufweisen.

9. Getriebe-Synchronisationsvorrichtung (1) nach einem der Ansprüche 1 bis 8, **dadurch gekennzeichnet, dass** die Synchronnabe (2) eine Muffenverzahnung (4) aufweist, die sich über einen Teil eines äußeren Umfanges erstreckt und von Ausnehmungen (25) unterbrochen ist, in denen Kraftverstärkungselemente (11) angeordnet sind, wobei ein Querschnitt der Ausnehmungen (25) unterhalb der Muffenverzahnung (4) größer wird, sodass sich die Muffenverzahnung (4) teilweise bis in den Bereich oberhalb der in den Ausnehmungen (25) aufgenommenen Kraftverstärkungselemente (11) erstreckt.

10. Getriebe-Synchronisationsvorrichtung (1) nach einem der Ansprüche 1 bis 9, **dadurch gekennzeichnet, dass** in der Ausnehmung (25) der Synchronnabe (2) ein Fixanschlag für einen Synchronring (10) angeordnet ist.

11. Getriebe-Synchronisationsvorrichtung (1) nach einem der Ansprüche 9 bis 10, **dadurch gekennzeichnet, dass** in der Ausnehmung (25) der Synchronnabe (2) Rampen mit Funktionsflächen (30) angeordnet sind und die Muffenverzahnung (4) sich über diese Rampen - in Umfangsrichtung betrachtet - erstreckt.

12. Getriebe-Synchronisationsvorrichtung (1) nach Anspruch 11, **dadurch gekennzeichnet, dass** die Funktionsflächen (30) an einem ringförmigen, unterbrochenen Steg (31) ausgebildet sind.

13. Getriebe-Synchronisationsvorrichtung (1) nach einem der Ansprüche 1 bis 12, **dadurch gekennzeichnet, dass** das Kraftverstärkungselement (11) am Synchronring (10) eingriffsfrei anliegt.

## Claims

1. Gear synchronisation device (1) with at least one synchroniser hub (2) which can be fitted on a shaft, on which at least one synchroniser ring (10) is disposed lying opposite in axial direction, at least one gear wheel which can be fitted on the shaft, at least one friction packet disposed underneath the synchroniser ring and actively connected to the latter, and with at least one sliding sleeve which can be fitted around the hub, and a coupling body (29) is disposed between the gear wheel and synchroniser ring (10), and the synchroniser hub (2) has at least one recess (13) in which at least one spring biased force transmitting element (11) is disposed, which has a main body (17) with a height (18) and - as seen in plan view - a longitudinal extension (19) and a width extension (20), and the longitudinal extension is disposed in the circumferential direction of the synchroniser hub (2), and having two distal end regions (21) lying opposite one another in the direction of the longitudinal extension (19), each of which is provided with a functional surface (22) which co-operates with the synchroniser hub (2) in the fitted state, and the functional surfaces (22) are offset in opposite directions, in particular in mirror image, and inclined towards the longitudinal extension (19) or along a longitudinal mid-axis (38) in the direction of the longitudinal extension (19) of the main body (17) and preferably extending at least approximately parallel with one another, and the functional surfaces (22) are each oriented at an acute angle (23) to the largest longitudinal extension (19) of the main body (11), **characterised in that** the largest longitudinal extension (19) of the main body (17) is on the side facing the synchroniser ring in the axial direction.

2. Gear synchronisation device (1) as claimed in claim 1, **characterised in that** the angle (23) of the force transmitting element (11) has an absolute value selected from a range with a lower limit of 10 ° and an upper limit of 89°.

3. Gear synchronisation device (1) as claimed in claim 1 or 2, **characterised in that** the functional surfaces (22) of the force transmitting element (11) have a size selected from a range with a lower limit of 10 mm² and an upper limit of 60 mm².

4. Gear synchronisation device (1) as claimed in one of the preceding claims, **characterised in that** a cross-section of the main body (17) of the force transmitting element (11) is at least approximately U-shaped in direction of the height (18).

5. Gear synchronisation device (1) as claimed in one of the preceding claims, **characterised in that** a middle region (26) of the main body (17) of the force transmitting element (11) is of a raised design.

6. Gear synchronisation device (1) as claimed in one of the preceding claims, **characterised in that** at least one of the edges of the functional surfaces (22) of the force transmitting element (11) is interrupted in direction of the height (18).

7. Gear synchronisation device (1) as claimed in one of the preceding claims, **characterised in that** one circular segment-shaped lever element (34) is disposed in each of the distal end regions (21) of the main body (17) of the force transmitting element (11) lying opposite one another in the longitudinal extension (19).

8. Gear synchronisation device (1) as claimed in claim 7, **characterised in that** the lever elements (34) have at least approximately bead-type projections (35) on the surfaces which can be turned towards the synchroniser hub (2) in the region of ends facing away from the main body (17).

9. Gear synchronisation device (1) as claimed in one of claims 1 to 8, **characterised in that** the synchroniser hub (2) has sleeve toothing (4) which extends across a part of an external circumference and is interrupted by recesses (25) in which force transmitting elements (11) are disposed, and a cross-section of the recesses (25) underneath the sleeve toothing (4) is getting bigger so that the sleeve toothing (4) extends partially into the region above the force transmitting elements (11) accommodated in the recesses (25).

10. Gear synchronisation device (1) as claimed in one of claims 1 to 9, **characterised in that** a fixed stop for a synchroniser ring (10) is disposed in the recess (25) of the synchroniser hub (2).

11. Gear synchronisation device (1) as claimed in one of claims 9 to 10, **characterised in that** ramps with functional surfaces (30) are disposed in the recess (25) of the synchroniser hub (2) and the sleeve toothing (4) extends across these ramps - as viewed in the circumferential direction.

12. Gear synchronisation device (1) as claimed in claim 11, **characterised in that** the functional surfaces (30) are disposed on an annular, interrupted web (31).

13. Gear synchronisation device (1) as claimed in one of claims 1 to 12, **characterised in that** the force transmitting element (11) lies against the synchroniser ring (10) in a non-meshing arrangement.

## Revendications

1. Dispositif de synchronisation pour boîte de vitesses (1), comportant au moins un moyeu de synchronisation (2), qui est apte à être monté sur un arbre et sur lequel, sur le côté opposé dans le sens axial, est disposé au moins un anneau de synchronisation (10), au moins un pignon apte à être monté sur l'arbre, au moins un paquet de friction qui est disposé en dessous de l'anneau de synchronisation et en interaction avec celui-ci, ainsi qu'au moins un manchon baladeur pouvant être monté au-dessus du moyeu, un corps d'accouplement (29) étant disposé entre le pignon et l'anneau de synchronisation (10), et ledit moyeu de synchronisation (2) comportant au moins un évidement (13), dans lequel est disposé un élément amplificateur de force (11) sollicité par ressort, lequel comporte un corps de base (17), qui présente une hauteur (18) et - sur une vue en élévation - une longueur (19) et une largeur (20), ladite longueur étant disposée dans la direction circonférentielle du moyeu de synchronisation (2), et qui, dans le sens de la longueur (19), comporte deux zones d'extrémité (21) distales opposées l'une à l'autre, sur chacune desquelles est réalisée une surface fonctionnelle (22) coopérant, dans la position montée, avec le moyeu de synchronisation (2), lesdites surfaces fonctionnelles (22) étant inclinées en direction opposée, en particulier de manière diamétralement opposée, et dans le sens opposé à la longueur (19) ou étant décalées le long d'un axe médian longitudinal (38) dans le sens de la longueur (19) du corps de base (17) et étant de préférence au moins sensiblement parallèles entre elles, et lesdites surfaces fonctionnelles (22) étant orientées chacune en formant un angle aigu (23) avec la plus grande longueur (19) du corps de base (17), **caractérisé en ce que** le corps de base (17) possède la plus grande longueur (19) dans le sens axial sur le côté orienté vers l'anneau de synchronisation.

2. Dispositif de synchronisation pour boîte de vitesses (1) selon la revendication 1, **caractérisé en ce que** l'angle (23) de l'élément amplificateur de force (11) a une valeur absolue choisie dans une plage avec une limite inférieure de 10° et une limite supérieure de 89°.

3. Dispositif de synchronisation pour boîte de vitesses (1) selon la revendication 1 ou 2, **caractérisé en ce que** les surfaces fonctionnelles (22) de l'élément amplificateur de force (11) ont une étendue choisie dans une plage avec une limite inférieure de 10 mm² et une limite supérieure de 60 mm².

4. Dispositif de synchronisation pour boîte de vitesses (1) selon l'une quelconque des revendications précédentes, **caractérisé en ce qu'**une section transversale du corps de base (17) de l'élément amplificateur de force (11) est réalisée au moins sensiblement en forme de U dans le sens de la hauteur (18).

5. Dispositif de synchronisation pour boîte de vitesses (1) selon l'une quelconque des revendications précédentes, **caractérisé en ce qu'**une zone centrale (26) du corps de base (17) de l'élément amplificateur de force (11) est réalisée sous forme surélevée.

6. Dispositif de synchronisation pour boîte de vitesses (1) selon l'une quelconque des revendications précédentes, **caractérisé en ce qu'**au moins un des bords de chacune des surfaces fonctionnelles (22) de l'élément amplificateur de force (11) est brisé dans le sens de la hauteur (18).

7. Dispositif de synchronisation pour boîte de vitesses (1) selon l'une quelconque des revendications précédentes, **caractérisé en ce qu'**un élément de levier (34) en forme de découpe annulaire est disposé sur chacune des zones d'extrémité (21) distales, opposées l'une à l'autre dans le sens de la longueur (19), du corps de base (17) de l'élément amplificateur de force (11).

8. Dispositif de synchronisation pour boîte de vitesses (1) selon la revendication 7, **caractérisé en ce que** les éléments de levier (34), au niveau des surfaces pouvant être orientées vers le moyeu de synchronisation (2), dans la zone des extrémités opposées au corps de base (17), comportent des saillies (35) au moins sensiblement en forme de bossages.

9. Dispositif de synchronisation pour boîte de vitesses (1) selon l'une quelconque des revendications 1 à 8, **caractérisé en ce que** le moyeu de synchronisation (2) comporte une denture de jonction (4) qui couvre une partie de la périphérie extérieure et est interrompue par des évidements (25), dans lesquels sont disposés des éléments amplificateurs de force (11), une section transversale des évidements (25) en dessous de la denture de jonction (4) s'agrandissant de telle sorte que la denture de jonction (4) s'étend partiellement jusque dans la zone au-dessus des éléments amplificateurs de force (11) logés dans les évidements (25).

10. Dispositif de synchronisation pour boîte de vitesses (1) selon l'une quelconque des revendications 1 à 9, **caractérisé en ce que** dans l'évidement (25) du moyeu de synchronisation (2) est disposée une butée fixe pour un anneau de synchronisation (10).

11. Dispositif de synchronisation pour boîte de vitesses (1) selon l'une quelconque des revendications 9 à 10, **caractérisé en ce que** dans l'évidement (25) du moyeu de synchronisation (2) sont disposées des rampes avec des surfaces fonctionnelles (30), et la denture de jonction (4) s'étend sur ces rampes - par référence à la direction circonférentielle.

12. Dispositif de synchronisation pour boîte de vitesses (1) selon la revendication 11, **caractérisé en ce que** les surfaces fonctionnelles (30) sont réalisées sur une nervure (31) annulaire interrompue.

13. Dispositif de synchronisation pour boîte de vitesses (1) selon l'une quelconque des revendications 1 à 12, **caractérisé en ce que** l'élément amplificateur de force (11) est en appui sans engagement sur l'anneau de synchronisation (10).
